(19) Europäisches Patentamt / European Patent Office / Office européen des brevets

(11) **EP 4 765 709 A1**

(12) **EUROPEAN PATENT APPLICATION**
published in accordance with Art. 153(4) EPC

(43) Date of publication:
24.06.2026 Bulletin 2026/26

(21) Application number: 24864535.0

(22) Date of filing: 05.09.2024

(51) International Patent Classification (IPC):
$H04L\ 5/00$ (2006.01)   $H04W\ 72/0453$ (2023.01)
$H04B\ 7/0413$ (2017.01)

(52) Cooperative Patent Classification (CPC):
H04B 7/0413; H04L 5/00; H04W 72/0453;
H04W 72/1268; H04W 72/566

(86) International application number:
PCT/CN2024/117177

(87) International publication number:
WO 2025/055815 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 15.09.2023 CN 202311202078

(71) Applicant: HUAWEI TECHNOLOGIES CO., LTD.
Shenzhen 518129 (CN)

(72) Inventors:
• FANG, Liyou
  Shenzhen, Guangdong 518129 (CN)
• CHEN, Chao
  Shenzhen, Guangdong 518129 (CN)
• GAO, Hui
  Shenzhen, Guangdong 518129 (CN)

(74) Representative: Körber, Martin Hans
Mitscherlich PartmbB
Karlstraße 7
80333 München (DE)

(54) **COMMUNICATION METHOD, COMMUNICATION DEVICE, AND COMPUTER-READABLE STORAGE MEDIUM**

(57) A communication method, a communication device, and a computer-readable storage medium are provided. The method includes: determining, in a multi-user multiple-input multiple-output mode, that a proportion of a terminal device located at an edge of a cell exceeds a threshold. The method further includes: allocating, based on a scheduling priority and a first proportion, an available uplink frequency domain resource in one time unit to a terminal device that is to be scheduled in the time unit. In this method, for a user at a far point of uplink coverage, a power aggregation gain can be obtained, an SINR is improved, and an uplink user-perceived rate is increased, to implement scheduling fairness.

FIG. 3

**Description**

**TECHNICAL FIELD**

This application relates to the communication field, and more specifically, to a communication method, a communication device, and a computer-readable storage medium.

**BACKGROUND**

In an uplink scheduling process, a network device determines, based on a buffer status, power headroom, channel quality, product hardware information, and the like that are reported by a terminal device, a quantity of resource blocks (Resource Block, RB) required by the terminal device in one transmission time interval (Transmission Time Interval, TTI). In an order of scheduling priorities of terminal devices, the network device first performs frequency domain resource allocation or space domain resource allocation and then performs time domain resource allocation. In a cell, when some terminal devices are in a single-user multiple-input multiple-output (Single-User Multiple-Input Multiple-Output, SU-MIMO) mode and other terminal devices are in a multi-user multiple-input multiple-output (Multi-User Multiple-Input Multiple-Output, MU-MIMO) mode, the network device cannot obtain a power aggregation gain of a terminal device located at an edge of a cell.

**SUMMARY**

A possible implementation in an example of this application provides a solution for uplink frequency domain resource allocation.

According to a first aspect of this application, a communication method is provided. The method includes: determining, in a multi-user multiple-input multiple-output mode, that a proportion of a terminal device located at an edge of a cell exceeds a threshold; and allocating, based on a scheduling priority and a first proportion, an available uplink frequency domain resource in one time unit to a terminal device that is to be scheduled in the time unit. In this method, for a user at a far point of uplink coverage, a power aggregation gain can be obtained, a signal-to-interference-plus-noise ratio (Signal-to-Interference-plus-Noise Ratio, SINR) is improved, and an uplink user-perceived rate is increased, to implement scheduling fairness.

In some implementations, the first proportion includes an equal proportion. In this manner, a power aggregation gain of a terminal device can be obtained, and scheduling fairness is implemented.

In some implementations, the allocating, based on the scheduling priority and the first proportion, the available uplink frequency domain resource in the time unit to the terminal device that is to be scheduled includes: determining, based on a quantity of available uplink frequency domain resources, the first proportion, and a quantity of terminal devices that are to be scheduled in the time unit, a first quantity of uplink frequency domain resources to be allocated to a first terminal device in the terminal device that is to be scheduled; if a second quantity of uplink frequency domain resources required by the first terminal device is less than the first quantity, allocating the second quantity of uplink frequency domain resources to the first terminal device; and if the second quantity is greater than the first quantity, allocating the first quantity of uplink frequency domain resources to the first terminal device.

In some implementations, the method further includes: determining a proportion between quantities of uplink frequency domain resources required in the time unit by the terminal devices that are to be scheduled as the first proportion.

In some implementations, the first proportion is determined based on a scheduling priority of the terminal device that is to be scheduled.

According to a second aspect of this application, a communication apparatus is provided. The communication apparatus includes a unit configured to perform the method according to the first aspect of this application.

According to a third aspect of this application, a communication device is provided. The communication device includes at least one processor and at least one memory. The at least one memory is coupled to the at least one processor and stores instructions for execution by the at least one processor. When the instructions are executed by the at least one processor, the communication device is enabled to implement the method according to the first aspect of this application.

According to a fourth aspect of this application, a computer-readable storage medium is provided. The computer-readable medium stores a computer program. When the computer program is executed by a processor, the method according to the first aspect of this application is implemented.

According to a fifth aspect of this application, a computer program product is provided. The computer program product includes machine-executable instructions. When the machine-executable instructions are executed by a communication device, the communication device is enabled to perform the method according to the first aspect of this application.

## BRIEF DESCRIPTION OF DRAWINGS

Features, advantages, and other aspects of implementations of this application become more apparent with reference to the accompanying drawings and the following detailed descriptions. Several implementations of this application are shown herein through an example but not a limitation. In the accompanying drawings:

FIG. 1 is a block diagram of a communication system in which a possible implementation of this application may be implemented;
FIG. 2A is a diagram of RB allocation performed based on an order of scheduling priorities of terminal devices;
FIG. 2B is a diagram of RB allocation when all terminal devices are in an SU-MIMO mode;
FIG. 2C is a diagram of RB allocation when some terminal devices are in an SU-MIMO mode and some other terminal devices are in an MU-MIMO mode;
FIG. 2D is a diagram in which retransmission scheduling continuously fails after initial transmission scheduling of a terminal device fails;
FIG. 3 is a flowchart of a communication method according to some implementations of this application;
FIG. 4 is a diagram of uplink frequency domain resource allocation in an MU-MIMO mode according to some possible implementations of this application;
FIG. 5 is a diagram of uplink frequency domain resource allocation in an MU-MIMO mode according to some other possible implementations of this application; and
FIG. 6 is a block diagram of an example communication device according to an implementation method of this application.

In the accompanying drawings, same or similar reference numbers represent same or similar elements.

## DESCRIPTION OF EMBODIMENTS

The following describes possible implementations of this application in more detail with reference to the accompanying drawings. Although some possible implementations of this application are shown in the accompanying drawings, it should be understood that this application may be implemented in various forms, and should not be construed as being limited to the possible implementations described herein, and instead, these possible implementations are provided for a more thorough and complete understanding of this application. It should be understood that, the accompanying drawings and the possible implementations of this application are merely used as examples and are not used to limit the protection scope of this application.

In the descriptions of the possible implementations of this application, the term "include" and a similar term thereof should be understood as non-exclusive inclusions, that is, "including but not limited to". The term "based on" should be understood as "at least partially based on". The term "one possible implementation" or "this possible implementation" should be understood as "at least one possible implementation". The terms "first", "second", and the like may represent different objects or a same object. Other explicit and implicit definitions may also be included below. An expression similar to "at least one of A, B, and C" or "at least one of A, B, or C" should be understood as any one of the following: at least one A; at least one B; at least one C; at least one A and at least one B; at least one A and at least one C; at least one B and at least one C; or at least one A, at least one B, and at least one C. The foregoing uses the three elements A, B, and C as an example for description. When there are more elements in the expression, a meaning of the expression may be obtained according to the foregoing rule.

The possible implementations of this application may be implemented according to any appropriate communication protocol, including but not limited to cellular communication protocols such as a 4th generation (4G) cellular communication protocol and a 5th generation (5G) cellular communication protocol, a wireless local area network communication protocol like Institute of Electrical and Electronics Engineers (IEEE) 802.11, and/or any other protocol currently known or developed in the future. The technical solutions in the possible implementations of this application are applied to any appropriate communication system, for example, a general packet radio service (GPRS) system, a long term evolution (LTE) system, a frequency division duplex (FDD) system, a time division duplex (TDD) system, a universal mobile telecommunications system (UMTS), a narrowband internet of things (NB-IoT) communication system, or a future 5th generation (5G) system or new radio (NR) access technology.

For the purpose of description, the following describes the possible implementations of this application in a background of a 3rd generation partnership project (3GPP) communication system in 5G. However, it should be understood that the possible implementations of this application are not limited to being applied to a 5G communication system, and may be applied to any other communication system with a similar problem, provided that there is uplink scheduling in the communication system.

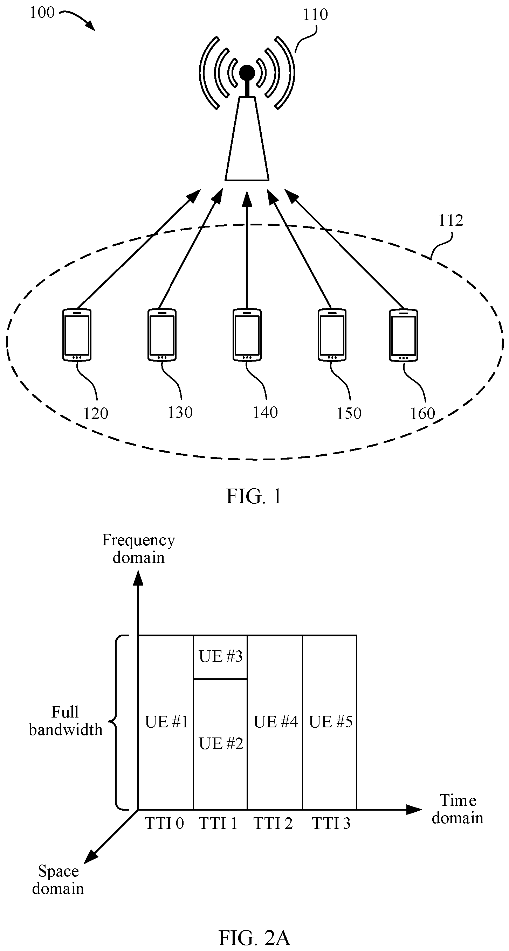

FIG. 1 is a block diagram of a communication system 100 in which a possible implementation of this application may be implemented. As shown in the figure, the communication system 100 includes a network device 110 and terminal devices 120, 130, 140, 150, and 160. The terminal devices 120, 130, 140, 150, and 160 are located in a cell 112 provided by the network device 110. That the network device 110 sends control information and/or data to the terminal devices 120, 130, 140, 150, and 160 is referred to as downlink (Downlink, DL) communication, and that the terminal devices 120, 130, 140, 150, and 160 send control information and/or data to the network device 110 is referred to as uplink (Uplink, UL) communication.

The network device 110 is any device that can communicate with the terminal devices 120, 130, 140, 150, and 160. For example, the network device 110 may include a NodeB (NodeB), an evolved NodeB (eNodeB), a base station in a 5G mobile communication system, a next-generation mobile communication NodeB (Next generation NodeB, gNB), a base station in a future mobile communication system, an access node in a Wi-Fi system, or the like.

The terminal devices 120, 130, 140, 150, and 160 are any devices that can communicate with the network device 110. For example, the terminal devices 120, 130, 140, 150, and 160 may include sensors such as a mobile phone, a vehicle, a tablet computer, a smart speaker, a train detector, and a gas station. Main functions of the terminal devices 120, 130, 140, 150, and 160 include but are not limited to: collecting data, receiving control information and/or downlink data from the network device 110, sending an electromagnetic wave, and sending control information and/or uplink data to the network device 110.

It may be understood that a quantity of network devices and a quantity of terminal devices shown in FIG. 1 are merely examples, and are not intended to impose any limitation. Based on an actual need, the communication system 100 may include any appropriate quantity of network devices and any appropriate quantity of terminal devices.

The network device 110 determines an available uplink frequency domain resource in one time unit. In a possible implementation, the time unit may include but is not limited to a TTI, and the uplink frequency domain resource may include but is not limited to an RB. The following describes an uplink frequency domain resource allocation process by using an example in which a network device allocates an RB to a terminal device in a TTI.

FIG. 2A is a diagram of RB allocation based on an order of scheduling priorities of terminal devices. For brevity, the terminal device is also referred to as "a UE" in the following. In an example in FIG. 2A, in the order of the scheduling priorities of the UEs, the network device first performs frequency domain resource allocation or space domain resource allocation and then performs time domain resource allocation. For example, the order of the scheduling priorities of the UEs is: a UE #1 > a UE #2 > a UE #3 > a UE #4 > a UE #5. A quantity of RBs required by the UE #1 in a TTI 0 is greater than or equal to a quantity of RBs corresponding to a full bandwidth (that is, a system bandwidth), and the network device allocates, to the UE #1 based on the order of the scheduling priorities, the RBs corresponding to the full bandwidth. Therefore, the network device can schedule the UE #2 and the UE #3 only in a next TTI (that is, a TTI 1), and a total quantity of RBs required by the UE #2 and the UE #3 is less than or equal to the quantity of RBs corresponding to the full bandwidth. Both a quantity of RBs required by the UE #4 and a quantity of RBs required by the UE #5 are greater than the quantity of RBs corresponding to the full bandwidth. Therefore, only the UE #4 is scheduled in a TTI 2, and only the UE #5 is scheduled in a TTI 3.

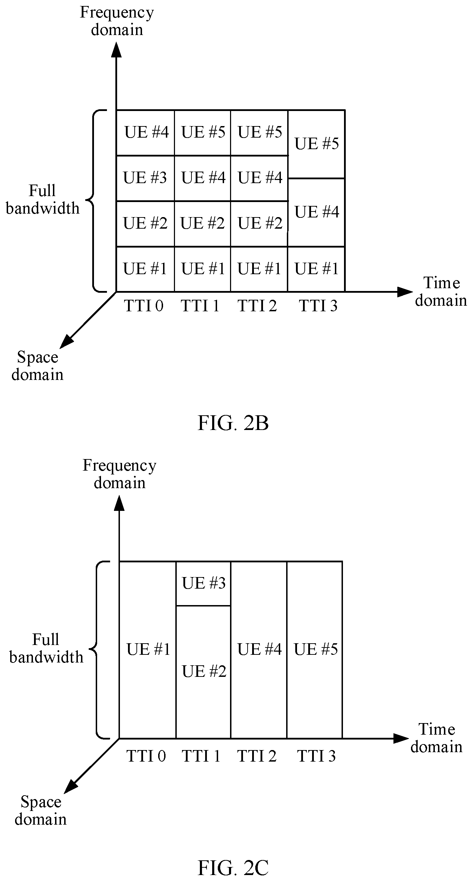

FIG. 2B is a diagram of RB allocation when all terminal devices are in an SU-MIMO mode. In an example in FIG. 2B, all UEs in a cell are in the SU-MIMO mode, and the network device evenly allocates, in one TTI based on an order of scheduling priorities of the UEs, RBs corresponding to a full bandwidth to the UEs. For example, the order of the scheduling priorities of the UEs is: a UE #1 > a UE #2 > a UE #3 > a UE #4 > a UE #5. In a TTI 0, the network device simultaneously schedules four terminal devices: the UE #1, the UE #2, the UE #3, and the UE #4, and evenly allocates the RBs corresponding to the full bandwidth to the four terminal devices. In a TTI 1 and a TT 2, no data packet is transmitted by the UE #3. Therefore, the network device simultaneously schedules the UE #1, the UE #2, the UE #4, and the UE #5, and evenly allocates the RBs corresponding to the full bandwidth to the four terminal devices. In a TTI 3, no data packet is transmitted by the UE #2 or the UE #3. Therefore, the network device schedules only the UE #1, the UE #4, and the UE #5. In the TTI 3, because a quantity of RBs required by the UE #1 is less than a quantity of RBs that are evenly allocated to the three UEs, the network device allocates, to the UE #1, the quantity of RBs required by the UE #1, and then evenly allocates remaining RBs to the UE #4 and the UE #5.

FIG. 2C is a diagram of RB allocation when some UEs are in an SU-MIMO mode and some other UEs are in an MU-MIMO mode. When some UEs in a cell are in the SU-MIMO mode and some other UEs are in the MU-MIMO mode, in an order of scheduling priorities of the UEs, the network device first performs frequency domain resource allocation or space domain resource allocation and then performs time domain resource allocation. For example, the order of the scheduling priorities of the UEs is: a UE #1 > a UE #2 > a UE #3 > a UE #4 > a UE #5. In a TTI 0, a quantity of RBs required by the UE #1 is greater than or equal to a quantity of RBs corresponding to a full bandwidth. Therefore, the network device allocates the RBs corresponding to the full bandwidth to the UE #1. The network device can schedule the UE #2 and the UE #3 only in a next TTI (that is, a TTI 1), and a total quantity of RBs required by the UE #2 and the UE #3 is less than or equal to the quantity of RBs corresponding to the full bandwidth. Both a quantity of RBs required by the UE #4 and a quantity of RBs required by the UE #5 are greater than the quantity of RBs corresponding to the full bandwidth. Therefore, only the UE #4 is scheduled in a TTI 2 and only the UE #5 is scheduled in a TTI 3.

The network device is usually disposed at a cell center. A central location of the cell is referred to as a near point, an edge of the cell is referred to as a far point, and an area between the near point and the far point is referred to as a midpoint. For UEs at the midpoint and the far point of the cell, reference signal received power (Reference Signal Received Power, RSRP) and SINRs are low, and power is prone to be limited. If in the order of the scheduling priorities of the UEs, the network device first performs frequency domain resource allocation or space domain resource allocation and then performs time domain resource allocation, the network device cannot obtain power aggregation gains of these UEs. For example, as shown in FIG. 2C, in the TTI 0, the network device allocates, to the UE #1, the RBs corresponding to the full bandwidth. If the UE #1 is located at the edge of the cell and power is limited, the network device cannot obtain a power aggregation gain of the UE #1 based on the following calculation manner for a power spectral density (Power Spectral Density, PSD):

$$PSD = \text{Actual transmit power/Quantity of actually allocated RBs} \qquad (1)$$

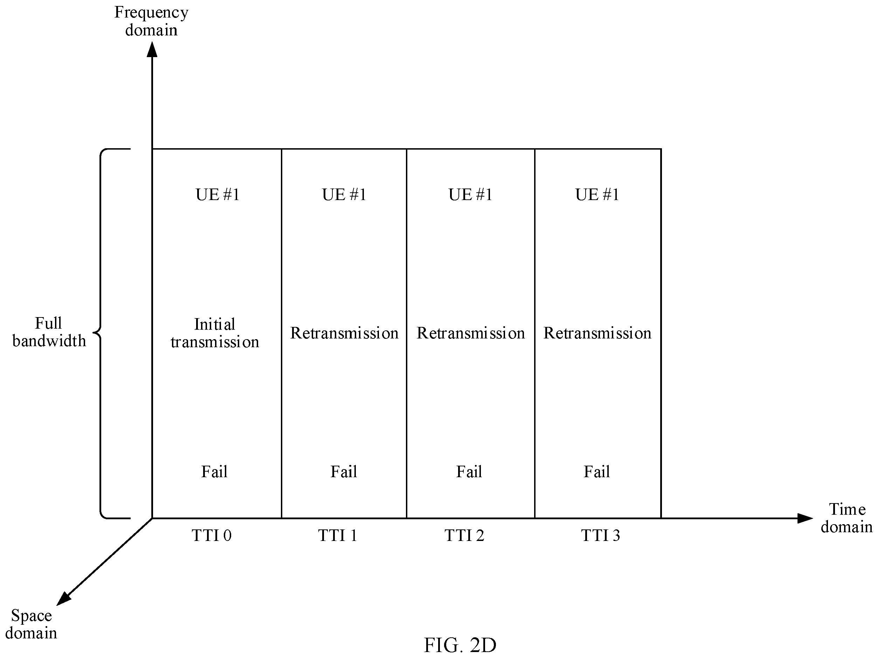

FIG. 2D is a diagram in which retransmission scheduling continuously fails after initial transmission scheduling of a UE fails. In an example in FIG. 2D, in an order of scheduling priorities of UEs, the network device first performs frequency domain resource allocation or space domain resource allocation and then performs time domain resource allocation. For example, the order of the scheduling priorities of the UEs is: a UE #1 > a UE #2 > a UE #3 > a UE #4 > a UE #5. In a TTI 0, because a scheduling priority of the UE #1 is highest and a quantity of RBs required by the UE #1 is greater than or equal to a quantity of RBs corresponding to a full bandwidth, the network device allocates, to the UE #1, the RBs corresponding to the full bandwidth. However, initial transmission scheduling of the UE #1 fails in the TTI 0. Therefore, the network device continuously performs retransmission scheduling of the UE #1 in a TTI 1, a TTI 2, and a TTI 3. Because a retransmission scheduling priority of the UE #1 is higher than an initial transmission scheduling priority of the UE #1, the network device cannot schedule another UE in the TTI 1, the TTI 2, and the TTI 3.

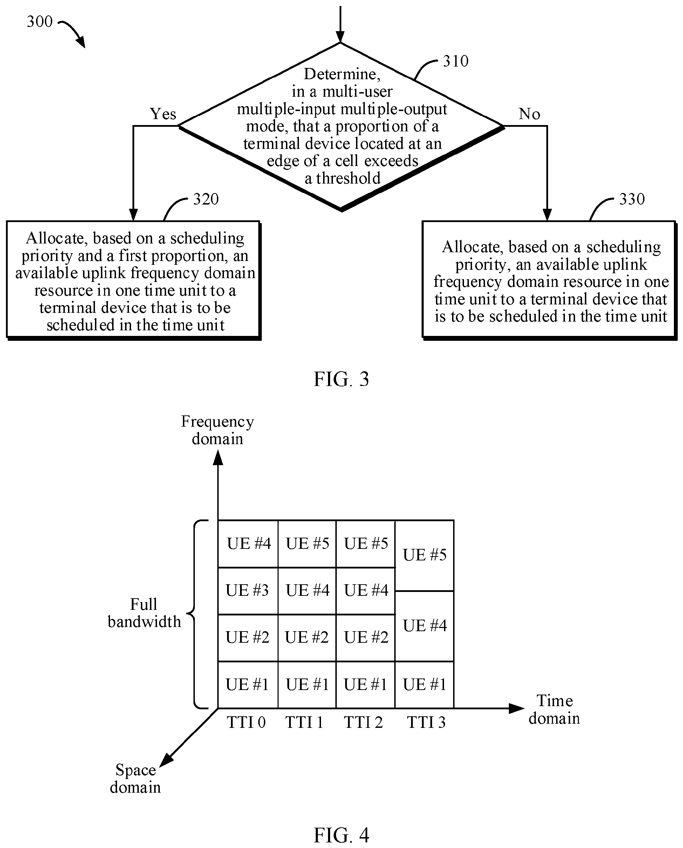

For at least the foregoing problem and other potential related problems, an implementation of this application provides a solution for uplink frequency domain resource allocation. In the solution, when UEs are in an MU-MIMO mode, it is determined that a proportion of a UE located at an edge of a cell exceeds a threshold, and available RBs in one TTI are allocated, based on a first proportion, to UEs that are scheduled in the TTI. The following describes the possible implementations of this application in detail with reference to FIG. 3 and FIG. 4.

FIG. 3 is a flowchart of a communication method 300 according to some implementations of this application. In some implementations, the method 300 may be implemented by the network device 110 in the example communication system 100, for example, may be implemented by a processor or a processing unit of the network device 110 in cooperation with another component (for example, a transceiver). In other implementations, the method 300 may alternatively be implemented by another communication device independent of the example communication system 100. For ease of description, the example method 300 is described with reference to FIG. 1.

In step 310, in an MU-MIMO mode, the network device 110 determines whether a proportion of a terminal device located at an edge of the cell 112 exceeds a threshold. In other words, the network device 110 determines whether the proportion of the terminal device located at the edge of the cell 112 is greater than or equal to the threshold. The threshold is also referred to as a "proportion threshold" in the following.

In some possible implementations, if the network device 110 enables an uplink MU-MIMO function, the cell 112 is in the MU-MIMO mode.

In some possible implementations, if the network device 110 detects that an RSRP of a terminal device in the cell 112 is less than an RSRP threshold, the network device 110 may determine that the terminal device is located at the edge of the cell 112. For example, in FIG. 1, if the network device 110 detects that RSRPs of the terminal devices 120 and 160 in the cell 112 are both lower than the RSRP threshold, the network device 110 may determine that the terminal devices 120 and 160 are located at the edge of the cell 112.

Alternatively, in a possible implementation, if the network device 110 detects that an SNR of a terminal device in the cell 112 is less than an SINR threshold, the network device 110 may determine that the terminal device is located at the edge of the cell 112.

In some possible implementations, the RSRP threshold may be predefined.

In some possible implementations, the SINR threshold may be predefined.

In some possible implementations, the proportion threshold may be predefined.

For example, the proportion threshold may be 30%. If a maximum quantity of terminal devices that are to be scheduled in one time unit is 4, and the network device 110 determines that the terminal devices 120 and 160 are located at the edge of the cell 112 (that is, a quantity of terminal devices located at the edge of the cell 112 is 2), a proportion of the terminal devices located at the edge of the cell 112 is 50% (greater than 30%). Therefore, the network device 110 may determine that the proportion of the terminal devices located at the edge of the cell 112 exceeds the proportion threshold.

It may be understood that the proportion threshold may be any appropriate value, which may include but is not limited to 30%. The protection scope of this application is not limited in this aspect.

If the proportion of the terminal device located at the edge of the cell 112 exceeds the proportion threshold, the method 300 proceeds to step 320.

In step 320, the network device 110 allocates, based on a scheduling priority and a first proportion, an available uplink frequency domain resource in one time unit to a terminal device that is to be scheduled in the time unit.

In some possible implementations, the time unit may include but is not limited to a TTI.

In some possible implementations, the uplink frequency domain resource may include but is not limited to an RB.

For example, the available uplink frequency domain resource in one time unit may include an available RB in one TTI. The available RB in one TTI may include an RB corresponding to a full bandwidth.

In some possible implementations, the network device 110 may determine, based on scheduling priorities of terminal devices, terminal devices that are to be scheduled in one time unit. For example, if an order of scheduling priorities of the terminal devices 120, 130, 140, 150, and 160 (which are respectively referred to as a UE #1, a UE #2, a UE #3, a UE #4, and a UE #5 below for short) is: the UE #1 > the UE #2 > the UE #3 > the UE #4 > the UE #5, the UE #1, the UE #2, the UE #3, the UE #4, and the UE #5 all have uplink data to be sent in one time unit, and a maximum quantity of terminal devices that are to be scheduled in one time unit is 4, the network device 110 may determine, based on the scheduling priorities, that the terminal devices that are to be scheduled in one time unit are the UE #1, the UE #2, the UE #3, and the UE #4. For another example, if an order of scheduling priorities is: the UE #1 > the UE #2 > the UE #3 > the UE #4 > the UE #5, only the UE #1, the UE #2, and the UE #3 have uplink data to be sent, and a maximum quantity of terminal devices that are to be scheduled in one time unit is 4, the network device 110 may determine, based on the scheduling priorities, that the terminal devices that are to be scheduled in one time unit are the UE #1, the UE #2, and the UE #3.

In addition, if the proportion of the terminal device located at the edge of the cell 112 exceeds the proportion threshold, the method 300 proceeds to step 330.

In step 330, the network device 110 may allocate, based on a scheduling priority, an available uplink frequency domain resource in one time unit to a terminal device that is to be scheduled in the time unit. For example, the network device 110 may allocate, by using the method described in FIG. 2C and based on the scheduling priority, the available uplink frequency domain resource in one time unit to the terminal device that is to be scheduled in the time unit.

In the method 300, for a user at a far point of uplink coverage, a power aggregation gain can be obtained, an SINR is improved, and an uplink user-perceived rate is increased, to implement scheduling fairness.

In some possible implementations, the first proportion includes an equal proportion. In this possible implementation, the network device 110 may determine, based on a quantity of available uplink frequency domain resources, the first proportion (that is, the equal proportion), and a quantity of terminal devices that are to be scheduled in the time unit, a first quantity of uplink frequency domain resources that are to be allocated to a first terminal device in the terminal device that is to be scheduled. If a second quantity of uplink frequency domain resources required by the first terminal device is less than the first quantity, the second quantity of uplink frequency domain resources are allocated to the first terminal device. If the second quantity is greater than the first quantity, the first quantity of uplink frequency domain resources are allocated to the first terminal device. This is described with reference to FIG. 4.

FIG. 4 is a diagram of uplink frequency domain resource allocation in an MU-MIMO mode according to some possible implementations of this application. In an example shown in FIG. 4, in the MU-MIMO mode, a network device 110 allocates, based on an equal proportion, available RBs in one TTI to UEs that are to be scheduled in the TTI. The available RBs in one TTI include RBs corresponding to a full bandwidth (for example, 273 RBs), and a maximum quantity of UEs that are to be scheduled in one TTI is 4. An order of scheduling priorities of a UE #1, a UE #2, a UE #3, a UE #4, and a UE #5 is: the UE #1 > the UE #2 > the UE #3 > the UE #4 > the UE #5.

In a TTI 0, the UE #1, the UE #2, the UE #3, the UE #4, and the UE #5 all have uplink data to be sent. The network device 110 determines, based on the scheduling priorities, that UEs that are to be scheduled in the TTI 0 are the UE #1, the UE #2, the UE #3, and the UE #4. Therefore, the network device 110 allocates the RBs corresponding to the full bandwidth to the UE #1, the UE #2, the UE #3, and the UE #4 based on an equal proportion. In other words, the network device 110 may determine, based on a quantity of RBs corresponding to the full bandwidth (for example, 273), a first proportion (that is, 1:1:1:1), and a quantity of UEs that are to be scheduled in the TTI 0 (for example, 4), a quantity of RBs to be allocated to each of the UE #1, the UE #2, the UE #3, and the UE #4 (for example, 273/4≈68).

In a TTI 1 and a TT 2, the UE #3 has no uplink data to be sent. Therefore, the network device 110 determines, based on the scheduling priorities, that UEs that are to be scheduled separately in the TTI 1 and the TTI 2 are the UE #1, the UE #2, the UE #4, and the UE #5. Therefore, the network device 110 allocates the RBs corresponding to the full bandwidth to the UE #1, the UE #2, the UE #4, and the UE #5 based on an equal proportion.

In a TTI 3, the UE #2 and the UE #3 have no uplink data to be sent. Therefore, the network device 110 determines, based on the scheduling priorities, that UEs that are to be scheduled in the TTI 3 are the UE #1, the UE #4, and the UE #5. Therefore, the network device 110 may allocate the RBs corresponding to the full bandwidth to the UE #1, the UE #4, and the UE #5 based on an equal proportion. In other words, the network device 110 may determine, based on a quantity of RBs corresponding to the full bandwidth (for example, 273), a first proportion (that is, 1:1:1), and a quantity of UEs that are to be scheduled in the TTI 3 (for example, 3), a quantity of RBs to be allocated to each of the UE #1, the UE #4, and the UE #5 (for example, 273/3≈91). In the TTI 3, because a quantity of RBs required by the UE #1 (that is, a second quantity, for example, 68) is less than a quantity of RBs allocated, based on an equal proportion, to each of the UE #1, the UE #4, and the UE #5 (that is, a first quantity), the network device 110 allocates, to the UE #1, RBs of the quantity required by the UE #1 (for example, 68 RBs), and then allocates remaining RBs (for example, 205 RBs) to the UE #4 and the UE #5 based on an equal proportion. In the TTI 3, for example, a quantity of RBs required by the UE #4 (that is, the second quantity, for example, 120) is greater than a quantity of RBs allocated, based on an equal proportion, to the UE #4 and the UE #5 (that is, the first quantity, for example, 102). Therefore, the network device 110 allocates, to the UE #4, the RBs whose quantity is the quantity determined based on the equal proportion (for example, 102 RBs).

In the possible implementations shown in FIG. 4, for a user at a far point of uplink coverage, a power aggregation gain can be obtained, an SINR is improved, and an uplink user-perceived rate is increased, to implement scheduling fairness.

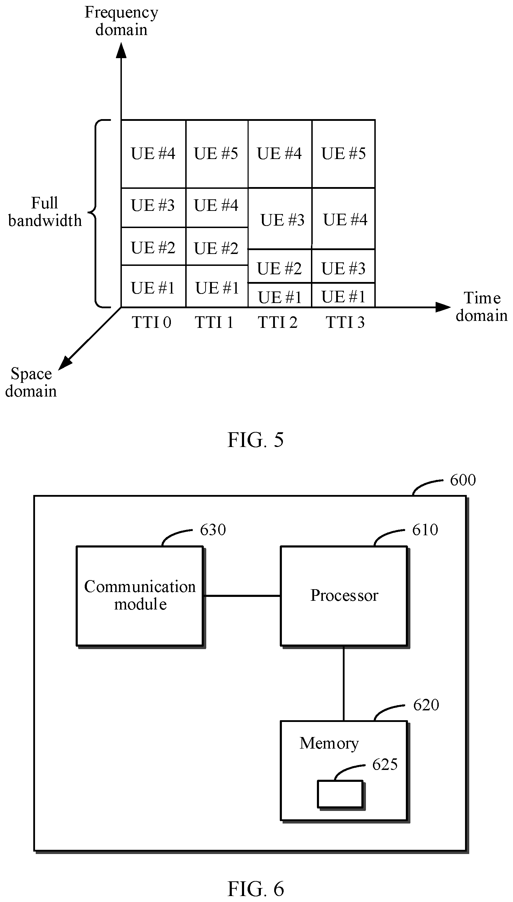

Alternatively, in some possible implementations, the network device 110 may determine a proportion between quantities of uplink frequency domain resources required in one time unit by the terminal devices that are to be scheduled as the first proportion. This is described with reference to FIG. 5.

FIG. 5 is a diagram of uplink frequency domain resource allocation in an MU-MIMO mode according to some other possible implementations of this application. In an example in FIG. 5, in the MU-MIMO mode, a network device 110 determines a proportion between quantities of RBs required in one TTI by UEs that are to be scheduled as a first proportion. Further, the network device 110 allocates, based on the first proportion, available RBs in one TTI to UEs that are to be scheduled in the TTI. The available RBs in one TTI include RBs corresponding to a full bandwidth (for example, 273 RBs), and a maximum quantity of UEs that are to be scheduled in one TTI is 4. An order of scheduling priorities of a UE #1, a UE #2, a UE #3, a UE #4, and a UE #5 is: the UE #1 > the UE #2 > the UE #3 > the UE #4 > the UE #5.

In a TTI 0, the UE #1, the UE #2, the UE #3, the UE #4, and the UE #5 all have uplink data to be sent. The network device 110 determines, based on the scheduling priorities, that UEs that are to be scheduled in the TTI 0 are the UE #1, the UE #2, the UE #3, and the UE #4. Quantities of RBs required by the UE #1, the UE #2, the UE #3, and the UE #4 in the TTI 0 are respectively 200, 100, 100, and 100. Therefore, a proportion between quantities of RBs required in the TTI 0 by the UE #1, the UE #2, the UE #3, and the UE #4 is 2:1:1:1. Therefore, the network device 110 allocates, based on the proportion of 2:1:1:1, the RBs corresponding to the full bandwidth to the UE #1, the UE #2, the UE #3, and the UE #4. In other words, the network device 110 may determine, based on a quantity of RBs corresponding to the full bandwidth (for example, 273), the first proportion (that is, 2:1:1:1), and a quantity (for example, 4) of the UEs that are to be scheduled in the TTI 0, that quantities of RBs to be allocated to the UE #1, the UE #2, the UE #3, and the UE #4 are respectively 109, 54, 54, and 54.

In a TTI 1, the UE #1, the UE #2, the UE #4, and the UE #5 all have uplink data to be sent, and the UE #3 has no uplink data to be sent. The network device 110 determines, based on the scheduling priorities, that UEs that are to be scheduled in the TTI 1 are the UE #1, the UE #2, the UE #4, and the UE #5. Quantities of RBs required by the UE #1, the UE #2, the UE #4, and the UE #5 in the TTI 1 are respectively 200, 100, 100, and 100. Therefore, a proportion between quantities of RBs required in the TTI 1 by the UE #1, the UE #2, the UE #4, and the UE #5 is 2:1:1:1. Therefore, the network device 110 allocates, based on the proportion of 2:1:1:1, the RBs corresponding to the full bandwidth to the UE #1, the UE #2, the UE #4, and the UE #5. In other words, the network device 110 may determine, based on a quantity (for example, 273) of the RBs corresponding to the full bandwidth, the first proportion (that is, 2:1:1:1), and a quantity of UEs that are to be scheduled in the TTI 1 (for example, 4), that quantities of RBs to be allocated to the UE #1, the UE #2, the UE #4, and the UE #5 are respectively 109, 54, 54, and 54.

In a TTI 2, the UE #1, the UE #2, the UE #3, and the UE #4 all have uplink data to be sent, and the UE #5 has no uplink data to be sent. The network device 110 determines, based on the scheduling priorities, that UEs that are to be scheduled in the TTI 2 are the UE #1, the UE #2, the UE #3, and the UE #4. Quantities of RBs required by the UE #1, the UE #2, the UE #3, and the UE #4 in the TTI 2 are respectively 200, 100, 100, and 100. Therefore, a proportion between quantities of RBs required in the TTI 2 by the UE #1, the UE #2, the UE #3, and the UE #4 is 2:2:1:1. Therefore, the network device 110 allocates, based on the proportion of 2:2:1:1, the RBs corresponding to the full bandwidth to the UE #1, the UE #2, the UE #3, and the UE #4. In other words, the network device 110 may determine, based on a quantity of RBs corresponding to the full bandwidth (for example, 273), the first proportion (that is, 2:2:1:1), and a quantity of UEs that are to be scheduled in the TTI 2 (for example, 4), that quantities of RBs to be allocated to the UE #1, the UE #2, the UE #3, and the UE #4 are respectively 91, 91, 45, and 45.

Similarly, in a TTI 3, the network device 110 may determine, based on a quantity of RBs corresponding to the full bandwidth (for example, 273), the first proportion (that is, 2:2:1:1), and a quantity of UEs that are to be scheduled in the TTI 3 (for example, 4), that quantities of RBs to be allocated to the UE #1, the UE #3, the UE #4, and the UE #5 are respectively 91, 91, 45, and 45.

In the possible implementations shown in FIG. 5, for a user at a far point of uplink coverage, a power aggregation gain can be obtained, an SINR is improved, and an uplink user-perceived rate is increased.

Alternatively, in some possible implementations, the first proportion may be determined based on scheduling priorities of terminal devices that are to be scheduled. In other words, the scheduling priorities of the terminal devices may be quantized to a fixed proportion (that is, the first proportion), and the network device 110 may allocate corresponding uplink frequency domain resources to the terminal devices based on the fixed proportion. In this possible implementation, the first proportion may be predefined or determined in advance. For example, an order of scheduling priorities of the UE #1, the UE #2, the UE #3, the UE #4, and the UE #5 is: the UE #1 > the UE #2 > the UE #3 > the UE #4 > the UE #5. Based on the scheduling priorities, the first proportion may be predefined as 2:1:1:1:1. Therefore, in the MU-MIMO mode, the network device 110 may allocate, based on the proportion, available RBs in one TTI to UEs that are to be scheduled in the TTI. In this manner, for a user at a far point of uplink coverage, a power aggregation gain can be obtained, an SINR is improved, and an uplink user-perceived rate is increased, to implement scheduling fairness.

It may be understood that, in the examples in FIG. 4 and FIG. 5, if there is a special type of terminal device like a control plane in a cell 112, this type of terminal device does not participate in uplink frequency domain resource allocation performed based on the first proportion. For example, the network device 110 may determine, from the RBs corresponding to the full bandwidth, an RB required by this type of terminal device, and allocate the RB to this type of terminal device based on a need. Further, the network device 110 may allocate, based on the first proportion, remaining RBs to terminal devices that are to be scheduled in one TTI. In this manner, for a user at a far point of uplink coverage, a power aggregation gain can be obtained, an SINR is improved, and an uplink user-perceived rate is increased, to implement scheduling fairness.

FIG. 6 is a block diagram of an example communication device 600 according to an implementation of this application. The example communication device 600 may be used to implement a communication device, for example, the network device 110 in FIG. 1. Therefore, the example communication device 600 may also be referred to as example communication device 600 in this specification. As shown in FIG. 6, the example communication device 600 may include a processor 610 and a memory 620 coupled to the processor 610. The memory 620 stores computer program instructions 625. In addition, the example communication device 600 may further include a communication module 630 coupled to the processor 610. The communication module 630 may be configured for bidirectional communication, and may have at least one cable, one optical cable, one wireless interface, and the like to facilitate communication. The communication interface may represent any interface configured to communicate with another device.

The processor 610 may be of any type suitable for a local technical environment, and may include, by way of non-limiting example, one or more of the following: a general-purpose computer, a dedicated computer, a microprocessor, a digital signal processor (DSP), and a processor that is based on a multi-core processor architecture. The example communication device 600 may have a plurality of processors, such as an application-specific integrated circuit chip that follows and is driven by, in terms of time, a clock synchronized with a primary processor. The memory 620 may include one or more non-volatile memories and one or more volatile memories. Examples of the non-volatile memory include but are not limited to a read-only memory (Read-Only Memory, ROM), an electrically erasable programmable read-only memory (Electrically Erasable Programmable Read-Only Memory, EEPROM), a flash memory, a hard disk, a compressed disk (Compressed Disk, CD), a digital versatile disc (Digital Versatile Disc, DVD), and another magnetic storage device and/or optical storage device. Examples of the volatile memory include but are not limited to a random access memory (RAM) or another volatile memory that does not persist during power outage. The computer program instructions 625 may include computer-executable instructions that can be executed by the associated processor 610. In some implementations, the computer program instructions 625 may be stored in the ROM of the memory 620. The processor 610 may perform various appropriate actions and processing by loading the memory 620 into the RAM of the memory 620. The implementations of the present disclosure may be implemented according to the computer program instructions 625, to cause the example communication device 600 to perform any method or process that is in this application and that is discussed above with reference to FIG. 5. Certainly, the implementations of this application may alternatively be implemented by hardware or a combination of software and hardware.

In some implementations, the computer program instructions 625 may be included in a tangible form in a computer-readable medium. Such a computer-readable medium may be included in the example communication device 600 (for example, the memory 620) or included in another storage device that is accessible by the example communication device 600. The example communication device 600 may read the computer program instructions 625 from the computer-readable medium to the RAM of the memory 620 for execution. The computer-readable medium may include various tangible nonvolatile storage devices, such as a ROM, an EPROM, a flash memory, a hard disk, a CD, and a DVD.

Generally, various example implementations of this application may be implemented by using hardware, a dedicated circuit, software, logic, or any combination thereof. Some aspects may be implemented by using hardware, while other aspects may be implemented by using firmware or software that may be executed by a controller, a microprocessor, or another compute device. For example, in some implementations, some or all of various examples (for example, the method, the apparatus, or the device) of this application may be implemented on the computer-readable medium. When the aspects of the implementations of this application are illustrated or described as block diagrams or flowcharts, or represented by some other graphics, it is understood that the block, apparatus, system, technology, or method described herein may be implemented as a non-limiting example by using hardware, software, firmware, a

**EP 4 765 709 A1**

dedicated circuit, logic, general-purpose hardware, a controller, or another compute device, or some combination thereof.

This application further provides at least one computer program product stored in a non-transitory computer-readable storage medium. The computer program product includes computer-executable instructions. The computer-executable instructions are included, for example, in a program module executed in a component of a target physical or virtual processor, and are used to perform the example method or example process 300 described above in FIG. 3. Generally, the program module may include a routine, a program, a library, an object, a class, a component, a data structure, and the like, and the program module executes a specific task or implements a specific abstract data structure. In various implementations, combination or division of functions of the program module may be performed on the described program modules. The computer-executable instructions for the program module may be executed locally or in a distributed device. In the distributed device, the program module may be located in both a local storage medium and a remote storage medium.

Program code used to implement the method of this application may be written in one or more programming languages. The computer program code may be provided for a processor of a general-purpose computer, a dedicated computer, or another programmable data processing apparatus, so that when the program code is executed by the computer or the another programmable data processing apparatus, the functions/operations specified in the flowcharts and/or the block diagrams are implemented. The program code may be executed in the following manner: all program code is executed on a computer, some program code is executed on a computer, the program code is executed as an independent software package, some program code is executed on a computer and some program code is executed on a remote computer, or all program code is executed on a remote computer or server. In the context of this application, the computer program code or related data may be carried in any appropriate carrier, so that the device, the apparatus, or the processor can perform various processes and operations described above. Examples of the carrier include a signal, a computer-readable medium, and the like.

The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. A more detailed example of a computer-readable storage medium includes an electrical connection with one or more wires, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof.

In addition, although the operations are described in a particular order, this should not be understood as a requirement that the operations be completed in the particular order shown or in a successive order, or performing all illustrated operations to achieve a desired result. In some cases, multi-tasking or parallel processing is beneficial. Similarly, although the foregoing descriptions include some specific implementation details, this should not be construed as limiting the scope of any application or claims, and should be construed as descriptions of specific implementations that may be specific to a specific application. Some features described in this specification in the context of separate implementations may alternatively be integrated into a single implementation. Instead, various features that are described in the context of a single implementation may alternatively be implemented separately in a plurality of implementations or in any suitable sub-combinations.

Although the subject matter has been described in a language specific to structural feature and/or methodological actions, it should be understood that the subject matter defined in the appended claims is not limited to the specific features or actions described above. Instead, the specific features and actions described above are disclosed as example forms of implementing the claims.

**Claims**

1. A communication method, wherein the method comprises:

   determining, in a multi-user multiple-input multiple-output mode, that a proportion of a terminal device located at an edge of a cell exceeds a threshold; and
   allocating, based on a scheduling priority and a first proportion, an available uplink frequency domain resource in one time unit to a terminal device that is to be scheduled in the time unit.

2. The method according to claim 1, wherein the first proportion comprises an equal proportion.

3. The method according to claim 1 or 2, wherein the allocating, based on the scheduling priority and the first proportion, the available uplink frequency domain resource in one time unit to the terminal device that is to be scheduled in the time unit comprises:

determining, based on a quantity of available uplink frequency domain resources, the first proportion, and a quantity of terminal devices that are to be scheduled in the time unit, a first quantity of uplink frequency domain resources to be allocated to a first terminal device in the terminal device that is to be scheduled;

if a second quantity of uplink frequency domain resources required by the first terminal device is less than the first quantity, allocating the second quantity of uplink frequency domain resources to the first terminal device; and if the second quantity is greater than the first quantity, allocating the first quantity of uplink frequency domain resources to the first terminal device.

4. The method according to any one of claims 1 to 3, wherein the method further comprises:
determining a proportion between quantities of uplink frequency domain resources required in the time unit by the terminal devices that are to be scheduled as the first proportion.

5. The method according to any one of claims 1 to 4, wherein the first proportion is determined based on a scheduling priority of the terminal device that is to be scheduled.

6. A communication apparatus, comprising a unit configured to perform the method according to any one of claims 1 to 5.

7. A communication device, comprising:

at least one processor; and
at least one memory, wherein the at least one memory is coupled to the at least one processor and is configured to store instructions to be executed by the at least one processor, and when the instructions are executed by the at least one processor, the communication device is enabled to implement the method according to any one of claims 1 to 5.

8. A computer-readable storage medium, storing computer program instructions, wherein when the computer program instructions are executed by a processor, the method according to any one of claims 1 to 5 is implemented.

9. A computer program product, wherein the computer program product comprises computer instructions, and when the computer instructions are run on a computer, the computer is enabled to perform the method according to any one of claims 1 to 5.

10. A system, comprising at least one communication apparatus, wherein the at least one communication apparatus is configured to perform the method according to any one of claims 1 to 5.

FIG. 1

FIG. 2A

FIG. 2B

FIG. 2C

EP 4 765 709 A1

Frequency
domain

Full
bandwidth

| UE #1 | UE #1 | UE #1 | UE #1 |
|---|---|---|---|
| Initial transmission | Retransmission | Retransmission | Retransmission |
| Fail | Fail | Fail | Fail |

TTI 0  TTI 1  TTI 2  TTI 3

Time
domain

Space
domain

FIG. 2D

300 ⌐

310

Determine,
in a multi-user
multiple-input multiple-output
mode, that a proportion of a
terminal device located at an
edge of a cell exceeds
a threshold

Yes

No

320

Allocate, based on a scheduling
priority and a first proportion, an
available uplink frequency domain
resource in one time unit to a
terminal device that is to be
scheduled in the time unit

330

Allocate, based on a scheduling
priority, an available uplink
frequency domain resource in one
time unit to a terminal device that
is to be scheduled in the time unit

FIG. 3

Frequency
domain

| | | | |
|---|---|---|---|
| UE #4 | UE #5 | UE #5 | UE #5 |
| UE #3 | UE #4 | UE #4 | |
| UE #2 | UE #2 | UE #2 | UE #4 |
| UE #1 | UE #1 | UE #1 | UE #1 |

Full
bandwidth

TTI 0   TTI 1   TTI 2   TTI 3

Time
domain

Space
domain

FIG. 4

Frequency
domain

| | | | |
|---|---|---|---|
| UE #4 | UE #5 | UE #4 | UE #5 |
| UE #3 | UE #4 | UE #3 | UE #4 |
| UE #2 | UE #2 | | |
| | | UE #2 | UE #3 |
| UE #1 | UE #1 | UE #1 | UE #1 |

Full
bandwidth

TTI 0   TTI 1   TTI 2   TTI 3

Time
domain

Space
domain

FIG. 5

FIG. 6

## INTERNATIONAL SEARCH REPORT

| International application No. |
|---|
| **PCT/CN2024/117177** |

**A. CLASSIFICATION OF SUBJECT MATTER**

H04L5/00(2006.01)i; H04W72/0453(2023.01)i; H04B7/0413(2017.01)i

According to International Patent Classification (IPC) or to both national classification and IPC

**B. FIELDS SEARCHED**

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, 3GPP: mu-mimo, mu mimo, 多用户MIMO, 多用户多输入多输出, 小区, cell, 边缘, 边界, edge, 远点, remote, UE, 终端, 用户, 时间单元, TTI, UL, 上行, 频域, 频率, frequency, 分配, allocate, 调度, schedule, 优先级, priority, 占比, 比例, 百分比, ratio, proportion, percent, 数量, quantity, 阈值, 门限, 预设值, threshold, limit, preset value, 功率, 汇聚, 提升, 增加, 提高, power, convergence, increase, 公平, fair

**C. DOCUMENTS CONSIDERED TO BE RELEVANT**

| Category* | Citation of document, with indication, where appropriate, of the relevant passages | Relevant to claim No. |
|---|---|---|
| A | US 2013058293 A1 (NTT DOCOMO, INC.) 07 March 2013 (2013-03-07) description, paragraph 10 | 1-10 |
| A | CN 103096330 A (ALCATEL-LUCENT SHANGHAI BELL CO., LTD.) 08 May 2013 (2013-05-08) entire document | 1-10 |
| A | WO 2021248264 A1 (QUALCOMM INC.) 16 December 2021 (2021-12-16) entire document | 1-10 |
| A | CN 104170505 A (HUAWEI TECHNOLOGIES CO., LTD.) 26 November 2014 (2014-11-26) entire document | 1-10 |
| A | US 2021266049 A1 (INDIAN INSTITUTE OF TECHNOLOGY HYDERABAD et al.) 26 August 2021 (2021-08-26) entire document | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2024** | **17 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/117177**

**C.    DOCUMENTS CONSIDERED TO BE RELEVANT**

| Category* | Citation of document, with indication, where appropriate, of the relevant passages | Relevant to claim No. |
|---|---|---|
| A | US 2021227403 A1 (AT&T INTELLECTUAL PROPERTY I, L.P.) 22 July 2021 (2021-07-22)<br>        entire document | 1-10 |
| A | WO 2010050899 A1 (AGENCY FOR SCIENCE, TECHNOLOGY AND RESEARCH) 06 May 2010 (2010-05-06)<br>        entire document | 1-10 |
| A | CN 107734698 A (COMBA TELECOM SYSTEMS (CHINA) LIMITED et al.) 23 February 2018 (2018-02-23)<br>        entire document | 1-10 |
| A | WO 2010101111 A1 (NTT DOCOMO, INC.) 10 September 2010 (2010-09-10)<br>        entire document | 1-10 |

Form PCT/ISA/210 (second sheet) (July 2022)

## INTERNATIONAL SEARCH REPORT
### Information on patent family members

| International application No. |
| --- |
| **PCT/CN2024/117177** |

| Patent document cited in search report | | | Publication date (day/month/year) | Patent family member(s) | | | Publication date (day/month/year) |
| --- | --- | --- | --- | --- | --- | --- | --- |
| US | 2013058293 | A1 | 07 March 2013 | EP | 2557861 | A1 | 13 February 2013 |
| | | | | EP | 2557861 | A4 | 22 July 2015 |
| | | | | JP | 2011223107 | A | 04 November 2011 |
| | | | | JP | 5080607 | B2 | 21 November 2012 |
| | | | | WO | 2011125709 | A1 | 13 October 2011 |
| CN | 103096330 | A | 08 May 2013 | | None | | |
| WO | 2021248264 | A1 | 16 December 2021 | US | 2023239124 | A1 | 27 July 2023 |
| CN | 104170505 | A | 26 November 2014 | WO | 2014089824 | A1 | 19 June 2014 |
| US | 2021266049 | A1 | 26 August 2021 | US | 11683081 | B2 | 20 June 2023 |
| US | 2021227403 | A1 | 22 July 2021 | US | 11246042 | B2 | 08 February 2022 |
| | | | | US | 2022132336 | A1 | 28 April 2022 |
| WO | 2010050899 | A1 | 06 May 2010 | US | 2011205929 | A1 | 25 August 2011 |
| | | | | TW | 201032611 | A | 01 September 2010 |
| | | | | CN | 102239717 | A | 09 November 2011 |
| CN | 107734698 | A | 23 February 2018 | WO | 2019105165 | A1 | 06 June 2019 |
| WO | 2010101111 | A1 | 10 September 2010 | US | 2012008489 | A1 | 12 January 2012 |
| | | | | US | 8711670 | B2 | 29 April 2014 |
| | | | | JP | 2010206476 | A | 16 September 2010 |
| | | | | JP | 5059798 | B2 | 31 October 2012 |

Form PCT/ISA/210 (patent family annex) (July 2022)